# DEMANDE DE BREVET EUROPEEN

(11) **EP 2 111 977 A1**
(43) Date de publication de la demande: **28.10.2009**
(21) Numéro de dépôt: 08103722.8
(22) Date de dépôt: 25.04.2008
(51) Int. Cl.: B32B 17/10, C03C 27/12, C09K 21/02

(54) **Vitrage anti-feu**

(71) Demandeur: AGC Flat Glass Europe SA, 1170 Bruxelles (Watermael-Boitsfort) (BE)
(72) Inventeur: Goelff, Pierre, 6040, Jumet (BE)
(74) Mandataire: Le Vaguerèse, Sylvain Jacques

(57) **Abrégé**

La présente invention concerne un vitrage anti-feu essentiellement transparent comprenant des feuilles de verre et une ou plusieurs couches de composition intumescente de silicate alcalin hydraté entre ces feuilles de verre, les épaisseurs de ces différents constituants et la composition de la ou des couches intumescentes obtenues sans séchage étant tels que l'épaisseur e du vitrage, exprimée en millimètres, feuilles de verre et couche(s) intumescente(s), et la classe de résistance au feu EI, exprimée en minutes, répondent à la relation 3 ≤ EI/e.

## Description

La présente invention concerne les vitrages transparents présentant des qualités de résistance au feu.

Les vitrages selon l'invention concernent notamment ceux qui par leur qualité répondent aux caractéristiques de ceux qualifiés de EI 60. Ces vitrages ont pour particularité de présenter dans les épreuves au feu normalisées EN 1364-1, une étanchéité aux flammes et à la fumée, et une isolation thermique telle que la température derrière ce vitrage au cours de l'essai ne s'accroisse pas de plus de 140°C en moyenne et de plus de 180°C localement, et ceci pendant une durée qui n'est pas inférieure à 60 minutes.

Des vitrages présentant cette résistance sont disponibles dans le commerce. Ils présentent différentes structures. Ils ont en commun d'associer un certain nombre de feuilles de verre avec des couches intumescentes à base de silicates alcalins hydratés. Ils se distinguent entre eux par leur construction et par certaines de leurs propriétés notamment mécaniques. Certains sont constitués avec des feuilles de verre trempées, pour accroître leur résistance à la fois mécanique et au choc thermique. Cette résistance permet, le cas échéant la mise en oeuvre de couches intumescentes qui ne présentent pas nécessairement une bonne tenue mécanique à l'épreuve au feu. La contrepartie de l'utilisation de verre trempé est que les vitrages en question doivent être constitués directement aux dimensions finales d'utilisation. Il n'est pas possible de les découper après la trempe.

Pour d'autres vitrages, pour parvenir aux qualités mécaniques en conservant la possibilité d'une découpe des vitrages à partir de volumes de grandes dimensions, le choix est fait d'utiliser des verres simplement recuits. Le choix des verres recuits implique généralement l'utilisation de structures plus complexes.

Il s'agit par exemple du remplacement des feuilles de verre monolithiques, ou au moins de certaines d'entre elles par des verres feuilletés. L'utilisation des feuilletés incluant par exemple une feuille traditionnelle de polyvinylbutyral (PVB), améliore sensiblement la résistance mécanique dans les conditions de température ambiante. La mise en oeuvre de constituants organiques présente cependant des inconvénients dans les épreuves au feu, ces constituants se décomposant à partir de températures qui ne sont pas très élevées. La présence d'au moins deux feuilles stratifiées permet de garantir qu'au moins celle qui n'est pas exposée directement au feu, et qui se trouve protégée par la couche intumescente, confère à l'ensemble la stabilité nécessaire dans ces épreuves.

Une autre voie dans la constitution de vitrages offrant toutes les qualités requises et permettant l'utilisation de verres recuits, consiste à utiliser des couches intumescentes de nature telle que, lors de l'épreuve au feu, ces couches ne risquent pas de fluage même lorsqu'elles ne sont plus enfermées entre des feuilles de verre, contrairement aux structures envisagées précédemment.

Dans le choix du type du matériau intumescent interviennent divers critères notamment celui de la teneur en eau des silicates utilisés. Cette teneur en eau est liée à la méthode de préparation.

Ainsi pour éviter le fluage du matériau intumescent à haute température, la teneur en eau doit être relativement faible. L'obtention de silicates à faible teneur en eau implique à son tour jusqu'à présent la formation des couches intumescentes comprenant une étape de séchage plus ou moins poussée à partir d'une composition liquide.

Les développements antérieurs dans ce domaine ont montré que ce séchage, s'il offre des avantages certains, se déroule dans un processus relativement long et donc coûteux. Il est d'autant plus long que le séchage est plus poussé et que l'épaisseur de la couche produite est plus importante.

Pour ces raisons notamment, lorsque des couches intumescentes à teneur en eau réduite sont produites par séchage, leur épaisseur est en pratique relativement modeste. En conséquence encore, en raison même de cette faible épaisseur, pour garantir les qualités de résistance au feu recherchées, il est nécessaire d'accroître le nombre des couches intumescentes et celui des feuilles de verre qui les séparent. Encore une fois ceci conduit à des structures relativement complexes.

Comme indiqué le choix de la nature des couches intumescentes est aussi un élément déterminant de la composition de ces vitrages. L'option permettant d'éviter les opérations de séchage a conduit antérieurement à des produits à teneur en eau élevée dont la tenue au feu modeste nécessite l'utilisation de feuilles de verre soit trempées soit feuilletées. L'autre solution consistant à l'utilisation de couches à faible teneur en eau permet de s'affranchir de certaines contraintes sur le choix des feuilles de verre mais, en contrepartie, nécessite un séchage des couches intumescentes et la multiplication de celles-ci.

Les contraintes de construction et/ou de préparation des vitrages obtenus antérieurement sont particulièrement sensibles lorsque ces vitrages doivent satisfaire à certaines performances. C'est le cas notamment pour ceux qui doivent atteindre des tenues au feu en terme d'isolation d'au moins 60 minutes dans la mesure où les solutions adoptées jusqu'à présent conduisent à des structures relativement épaisses et donc pesantes. Cette nécessité s'applique également aux vitrages offrant des performances de résistance au feu encore plus élevées. Pour les vitrages anti-feu dont la classe est EI 30, les avantages en terme d'épaisseur sont moins sensibles partant de vitrages qui dans tous les cas sont d'épaisseur relativement peu importante.

Les inventeurs ont montré qu'il était possible d'obtenir des vitrages anti-feu qui allient en partie au moins les avantages liés aux vitrages antérieurs, sans cumuler les inconvénients propres à ces derniers.

Les vitrages anti-feu essentiellement transparents selon l'invention sont constitués de feuilles de verre et de couches de silicates alcalins hydratés entre les feuilles de verre. La composition des silicates alcalins hydratés est telle qu'elle est applicable sans séchage, la prise en masse intervenant spontanément après mélange des constituants. Les silicates présentent une teneur en eau qui n'est pas supérieure à 44% en poids, et un rapport molaire SiO₂/M₂O au moins égal à 3,5, le choix des paramètres teneur en eau et rapport molaire étant tels que le rapport de la performance minimal au feu exprimée par la durée en minutes de la classe "EI", par l'épaisseur du vitrage e exprimée en millimètres, est au moins égal à 3.

Les classes anti-feu traditionnelles EI sont déterminées pour des périodes de temps de résistance de 30, 60, 90, et 120 minutes. Partant de ces temps , selon l'invention en tenant compte du rapport EI/e indiqué précédemment, les épaisseurs les plus fortes correspondant à chacune de ces classes sont en conséquence respectivement :
- 30/3 soit 10mm pour le EI 30
- 60/3 soit 20mm pour le EI 60
- 90/3 soit 30mm pour le EI 90
- 120/3 soit 40mm pour le EI 120.

Avantageusement les vitrages selon l'invention sont tels que 3,2≤ EI/e.

Des compositions intumescentes répondant aux conditions énoncées et leur mode de préparation sont décrits dans la demande de brevet européen non publiée n° 07 108 971 déposée le 25 mai 2007.

Une difficulté de préparation tient à la volonté d'éviter le séchage des solutions de silicates tout en conservant un rapport molaire suffisamment élevé. On sait en effet que lorsque que la teneur en eau est limitée, les solutions de silicates ne sont stables, autrement dit n'ont pas tendance à former spontanément un gel, que si le rapport molaire est très faible. Ces conditions ne correspondent pas à celles nécessaires pour la constitution des couches répondant aux conditions de l'invention.

Pour parvenir à des compositions adéquates les inventeurs ont montré précédemment que la préparation des compositions de silicates devait suivre un processus bien spécifique incluant notamment l'incorporation de silice colloïdale. Les modalités concernant les compositions adéquates et celles relatives à leur mode de préparation sont rappelées ci-après.

Le mode traditionnel de préparation des couches intumescentes, avec ou sans séchage comporte l'utilisation de solutions de silicates alcalins industriels comme composé de base. Ces solutions présentent des caractéristiques qui en limitent les possibilités d'utilisation. En particulier elles présentent des teneurs en eau relativement élevées, et ces teneurs sont d'autant plus importantes que le rapport molaire SiO₂/M₂O est lui-même plus important.

A titre indicatif la teneur en eau des solutions commerciales de silicates alcalins est de l'ordre de 65% en poids pour un rapport molaire de 3,3, et de l'ordre de 45% pour un rapport molaire de 2. Ces solutions industrielles sont ajustées pour maintenir une viscosité adéquate pour leurs utilisateurs. Aux valeurs indiquées ci-dessus, la viscosité se situe à environ 100mPa.s.

Pour les vitrages anti-feu des rapports molaires plus importants sont préférables pour améliorer le caractère réfractaire. Il apparaît donc que les silicates alcalins du commerce ne sont pas utilisables, ou pas utilisables tels quels pour la préparation des compositions intumescentes, notamment lorsqu'il s'agit de produits dont on veut éviter le séchage, les teneurs en eau étant beaucoup trop élevées.

En pratique les couches intumescentes produites et utilisées dans les vitrages anti-feu, présentent avantageusement un rapport molaire SiO₂/M₂O compris entre 3 et 8, et de préférence entre 3,5 et 6, et de façon particulièrement préférée entre 3,5 et 5, et leur teneur en eau s'établit entre 30 et 48% et de préférence entre 3 3 et 43%, et de façon particulièrement préférée de 35 à 40% en poids.

Selon le mode d'application conduisant aux vitrages, à savoir soit par coulée entre deux feuilles constituant une sorte de récipient de la composition liquide, le durcissement s'effectuant entre les feuilles, soit en appliquant la solution sur une feuille horizontale, une seconde feuille de verre étant appliquée ultérieurement sur la couche intumescente lorsque le durcissement est commencé ou même achevé, la teneur en eau peut être plus ou moins importante.

Dans tous les cas, les solutions commerciales de silicates alcalins ne peuvent être utilisées telles quelles. Compte tenu des différences importantes existant entre ces compositions et celles qui sont mises en oeuvre pour la formation des couches selon l'invention, il peut être préférable de procéder à la préparation de ces dernières sans utiliser, même pour partie, les solutions industrielles.

Pour préparer les compositions utilisées il est avantageux de partir de suspensions de silice colloïdale et d'hydroxyde alcalin. Ce dernier est soit sous forme de solution, soit au moins en partie sous forme de pastilles solides pour limiter le plus possible la teneur en eau du mélange. Les concentrations des solutions d'hydroxyde peuvent être relativement élevées. La teneur pondérale en oxydes métalliques peut atteindre 50% dans les solutions. Elle peut être de 85% dans les pastilles. Si les suspensions de silice ne dépassent pas ordinairement 50% en poids de silice, les compositions obtenues par réaction de ces suspensions avec l'hydroxyde alcalin peuvent présenter une teneur en eau sensiblement moindre que celle des silicates industriels et ceci avec des rapports molaires SiO₂/M₂O bien plus élevés. Par ailleurs la reproductibilité des compositions, et la régularité des propriétés des produits obtenus sont d'autant mieux assurées par ce mode de préparation.

Si néanmoins pour des raisons d'économie, il est préféré d'utiliser au moins partiellement des silicates industriels, il reste nécessaire de les modifier par un apport substantiel de silice colloïdale pour parvenir aux compositions présentant les rapports molaires recherchés sans avoir à éliminer une quantité d'eau excessive.

Dans tous les cas la préparation des compositions des silicates alcalins utilisée dans la formation des couches intumescentes sans séchage passe par l'utilisation de suspensions de silice colloïdale. La proportion de silice provenant de ces suspensions de silice colloïdale dans le matériau intumescent est avantageusement d'au moins 50%, de préférence d'au moins 60%, et de façon particulièrement préférée d'au moins 70%. La silice présente peut provenir en totalité de suspensions colloïdales.

Le durcissement des solutions de silicates alcalins dans la préparation desquelles intervient l'utilisation de suspension de silice, la composition étant par ailleurs identique, dépend pour partie au moins de la dimension des particules de silice utilisées.

De façon générale, il est apparu à l'expérience que l'accroissement des dimensions des particules, dans certaines limites, permet de retarder la prise en masse de la composition. Par voie de conséquence, les compositions dans lesquelles la dimension des particules de silice est accrue, peuvent présenter une teneur en eau réduite par rapport aux compositions de l'art antérieur, tout en conservant la fluidité requise pendant un temps suffisant pour l'utilisation dans les conditions habituelles.

Si les compositions antérieures utilisables ne permettaient pas de descendre en dessous d'une teneur en eau de 44%, et en pratique ne descendaient pas en dessous de 47-48%, l'utilisation de silice présentant des particules de dimensions telles qu'indiqué ci-après, permet d'atteindre des teneurs en eau bien inférieures, pouvant aller jusqu'à 30% en poids, tout en conservant les propriétés rhéologiques nécessaires.

Il va de soi que l'accroissement des dimensions des particules est limité. Au-delà d'une certaine dimension les compositions ne présentent plus les propriétés optiques requises, et en particulier la transparence. Des dimensions trop importantes conduisent à une diffusion de la lumière, ou, selon les termes usuels, à la formation d'un voile ("haze").

En pratique les particules de silice utilisées pour la formation des compositions de silicates alcalins ont un diamètre moyen qui n'est pas inférieur à 40nm et de préférence pas inférieur à 50nm. Ces particules ont aussi des dimensions moyennes qui ne dépassent pas avantageusement 150nm et de préférence pas 130nm. Le diamètre moyen particulièrement préféré se situe entre 60 et 120nm.

Les dimensions des particules d'une même suspension de silice sont ordinairement bien homogènes. Une part qui n'est pas inférieure à 80% en poids des particules se situe dans l'intervalle de ±10% du diamètre moyen.

Les dimensions des particules de silice dans les suspensions utilisées, apparaissent bien définies à l'observation en optique électronique. La mesure de ces dimensions, en dehors de l'observation optique, peut encore être faite par examen électro-acoustique (en utilisant par exemple un appareil de type "Acoustosizer"), par spectroscopie de corrélation de photons (en utilisant par exemple un appareil de type "Coulter Delsa 440SX"), ou encore par centrifugation.

Selon le mode de préparation adopté, et selon la teneur en eau recherchée dans la composition finale, une fois le mélange des constituants réalisé, il peut être nécessaire de procéder à un ajustement de la teneur en eau. Pour cela, une déshydratation peut être mise en oeuvre. Dans tous les cas, il est bien entendu préférable de faire en sorte que le mélange des différents constituants aboutisse à une composition dont la teneur en eau soit celle de la composition de la couche intumescente finale, ou au moins soit aussi voisine que possible de celle-ci. Avantageusement, et pour limiter l'opération de déshydratation éventuelle, la teneur en eau dans la composition telle que préparée, n'est pas supérieure à 50% en poids.

Lorsque la déshydratation est nécessaire, elle est faite avantageusement en soumettant le produit à une évaporation sous pression partielle. La déshydratation dans ce cas présente l'avantage de conduire simultanément au dégazage du produit. On prévient ainsi le risque d'entraînement de bulles dans la couche préparée à partir de cette composition.

La déshydratation peut être faite à température ambiante. Une température légèrement plus haute peut accélérer l'élimination de l'eau. Toutefois ce réchauffement de la composition doit rester très limité pour éviter tout risque de prise en masse anticipée. En pratique la température ne dépasse pas 60°C.

Après ajustement de la teneur en eau, la composition peut être conservée pendant plusieurs heures ou même plusieurs jours à température ambiante avant son utilisation. Lorsque les conditions de préparation, et en particulier lorsque le choix des particules de silice est effectué comme indiqué ci-dessus, la composition peut être conservée au moins 48h. Si le temps de conservation doit être prolongé bien au-delà, il est préférable pour éviter tout risque de prise en masse, de réfrigérer la composition par exemple aux environs de 4°C. A ces températures le "pot life" peut être très largement accru.

La couche intumescente est principalement composée de silicates alcalins et d'eau. Les silicates sont ceux ce potassium, sodium et lithium. Il est possible d'avoir un mélange de ces silicates, néanmoins un tel mélange n'est pas préféré pour la raison qu'il conduit à des couches dont la température de ramollissement est abaissée.

Les silicates de potassium sont préférés. Ils représentent avantageusement au moins 60% en poids de l'ensemble des silicates, et de préférence au moins 80%. De façon particulièrement préférée, la totalité des silicates utilisés, aux impuretés inévitables près, autrement dit, plus de 95% en poids, est constituée de silicate de potassium.

En dehors des silicates et de l'eau, divers additifs peuvent être introduits dans la composition, notamment des polyols, et en particulier de l'éthylène glycol ou de la glycérine.

Dans les produits intumescents séchés de l'art antérieur, l'introduction de ces polyols est destinée notamment à compenser le manque de plasticité des produits dont la teneur en eau est très faible (de 20 à 25%). La teneur en polyols peut alors s'élever jusqu'à 18-20% en poids dans la couche formée. Dans les couches intumescentes considérées ici, lorsque des polyols sont présents, leur teneur reste beaucoup plus faible. Elle n'est avantageusement pas supérieure à 10% en poids de la composition, et de préférence pas supérieure à 8%.

Des teneurs préférées en glycols, notamment en éthylène-glycol ou glycérine, sont comprises entre 2 et 6% en poids de la couche finale.

Traditionnellement les compositions intumescentes comportent encore d'autres additifs en faibles proportions. Il s'agit de produits azotés (urée, amines...) ou encore d'agents tensio-actifs.

Avantageusement les compositions contiennent de l'hydroxyde de tetra-methyl ammonium (TMAH) à une teneur qui n'est pas supérieure à 2% en poids.

La solution préparée est suffisamment stable aux conditions de température ambiante ordinaires. Elle peut être stockée pendant plusieurs heures, voire plusieurs jours, au besoin en la refroidissant, sans risque de formation d'un gel. Il est possible de mettre à profit cette stabilité pour éliminer les bulles qui peuvent être apparues dans le brassage du mélange. L'élimination peut intervenir en laissant simplement la solution au repos ou par toute technique connue telle que l'utilisation d'ultrasons ou le dégazage sous pression partielle par exemple.

L'utilisation de compositions intumescentes qui ne nécessitent aucun séchage, permet la constitution de couches intumescentes dont l'épaisseur n'est pas limitée. Précédemment cette épaisseur tenait compte de la longueur du temps de séchage. En pratique ce temps croissant comme le carré de l'épaisseur, pour rester dans des limites acceptables industriellement l'épaisseur des couches séchées ne dépassait pas ordinairement 2mm.

De façon pratique, pour certains vitrages il peut être utile de former des couches d'une épaisseur allant jusqu'à 8mm, voire même 10mm ou plus.

La structure des vitrages selon l'invention est décrite de façon détaillée dans la suite en comparaison avec des vitrages de l'art antérieur de la même classe EI.

Les planches de dessins annexées présentent :
- la figure 1, un vitrage de l'art antérieur formé à partir d'une composition de silicate qui n'est pas séchée et dont les feuilles de verre sont trempées ;
- la figure 2, un autre vitrage de l'art antérieur à feuilles de verre stratifiées ;
- la figure 3, un vitrage de l'art antérieur constitué à partir de couches de silicate séchées ;
- la figure 4, un vitrage selon l'invention.

Les vitrages faisant l'objet des figures sont représentatifs de ceux de la classe EI 60.

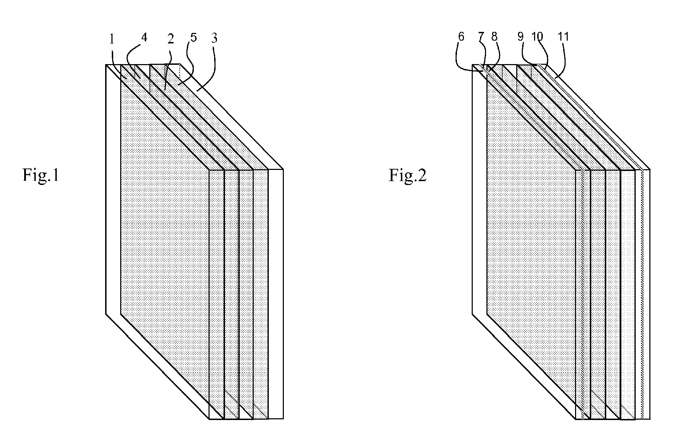

Le vitrage de l'art antérieur de la figure 1 est constitué de trois feuilles de verre 1, 2 et 3. Ces feuilles ont des épaisseurs approximativement de 5mm chacune. Entre ces feuilles de verre deux couches intumescentes de silicate alcalin hydraté sont introduites sous forme d'une solution coulée qui gélifie éventuellement par addition d'un agent spécifique. Les solutions en question comportent une teneur en eau de l'ordre de 47% en poids. L'épaisseur de composition intumescente est également de l'ordre de 5mm pour chacune des couches 4 et 5.

L'épaisseur totale du vitrage antérieur est de l'ordre de 25mm.

Les compositions à teneur aussi élevée en eau ont tendance à fluer avant de s'expanser sous l'effet de la chaleur. Pour que le vitrage puisse jouer son rôle, la feuille exposée au feu doit résister le temps nécessaire pour parvenir à l'expansion de la couche intumescente. Pour cette raison notamment, les feuilles de verre sont constituées de verre trempé. L'inconvénient est, comme indiqué précédemment, de devoir produire les vitrages directement aux dimensions finales d'utilisation.

Le vitrage de la figure 2 est aussi un vitrage commercialisé antérieurement. Ce vitrage comprend également trois feuilles de verre et deux couches intumescentes, ces dernières de composition analogue à celle du vitrage de la figure 1.

A la différence de la figure 1 les feuilles de verre, au moins sur les deux faces externes, sont stratifiées. Ces feuilles comprennent chacune deux feuilles de verre 6 et 8, ou 9 et 11, réunies au moyen d'une feuille de polyvinylbutyral 7 et 10. Les épaisseurs des feuilles de verre 6, 8, 9 et 11 sont de l'ordre de 2,1mm. Les feuilles de PVB sont traditionnellement de 0,38 ou 0,76mm. La feuille centrale est monolithique, et de 5mm d'épaisseur. L'épaisseur d'ensemble comme précédemment est d'environ 25mm.

Dans cette configuration les feuilles de verre sont recuites et se prêtent donc au découpage dans les conditions habituelles pour les verres feuilletés. La présence des intercalaires PVB permet au moins le maintien de l'ensemble dans les premiers instants de l'épreuve au feu, jusqu'à l'expansion d'au moins une couche intumescente. Par ailleurs la présence du PVB confère à ces vitrages, en dehors des épreuves au feu, des propriétés intéressantes de résistance au choc mou.

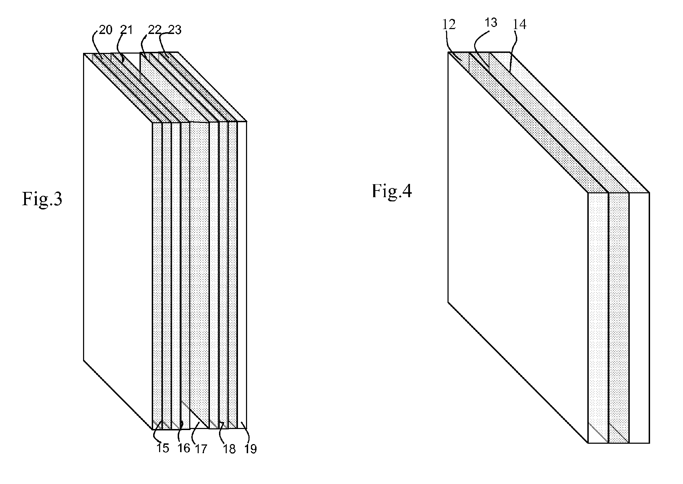

Le vitrage antérieur représenté à la figure 3, est un vitrage constitué avec des couches de silicate alcalin séchées 20, 21, 22 et 23. Les couches en question ont un teneur en eau de 23% en poids avec un rapport molaire de SiO₂/M₂O de 3,3. Chaque couche intumescente est d'environ 1,5mm d'épaisseur.

La composition du vitrage est de 5 feuilles de verre 15, 16, 17, 18, 19 entre lesquelles se situent les couches intumescentes. Les feuilles sont toutes en verre recuit. La feuille 18 centrale a une épaisseur de 8mm. Les autres feuilles ont une épaisseur de 3mm.

L'épaisseur totale du vitrage, toujours de classe EI 60, est de 25mm.

Le vitrage de la figure 3 se distingue des précédents, d'une part par le nombre élevé de feuilles de verre et de couches intumescentes, mais surtout par le fait que ces couches sont obtenues par séchage. L'assemblage à partir de feuilles identiques (une feuille de verre de 3mm et une couche intumescente de 1,5mm) facilite la constitution des ces vitrages. Néanmoins, même si les couches intumescentes sont d'épaisseur relativement faible la durée de séchage reste une contrainte importante de cette technique.

La figure 4 présente un vitrage selon l'invention. Il est constitué à partir de deux feuilles de verre recuit, 12 et 14, de 6mm d'épaisseur chacune.

Pour la production du vitrage, un cordon d'étanchéité est disposé à la périphérie. Ce cordon maintient les feuilles espacées de 6mm.

Dans l'espace entre les deux feuilles on coule une solution préalablement préparée d'un silicate alcalin (potassium).

La solution est préparée avec les constituants suivants :
- suspension de silice colloïdale à 50% en poids de silice commercialisée sous le nom "Klébosol 50R50", 1218g ;
- solution d'hydroxyde de potassium à 50% d'eau, 472g ;
- éthylène glycol à 99,5%, 58g ;
- TMAH en solution aqueuse à 25%, 60g.

Le mélange est effectué progressivement, à température maintenue à 25°C. Il est suivi d'une déshydratation pendant 1h30 sous pression réduite (entre 5 et 10 hPa) et à 30°C. Un dégazage final est effectué à 25°C sous pression de 40hPa pendant 3 heures.

La solution formée, qui est fluide et dépourvue de bulles, présente une teneur en eau de 38% en poids et un rapport molaire de 4,6. Elle est coulée entre les deux feuilles de verre.

La finition du vitrage comporte un passage en autoclave sous pression de l'ordre de 13.10³ hPa, à une température qui ne dépasse pas 70°C.

Les tests de résistance au feu sont effectués selon les conditions de la norme EN 1364-1. L'isolation thermique est maintenue au-delà de 60 minutes et l'étanchéité du vitrage se poursuit au moins jusqu'à 120 minutes.

Les échantillons testés pour leur résistance au vieillissement à température ambiante, ou en vieillissement accéléré à 60°C ou sous UV montrent une bonne stabilité. L'apparition de "haze" ou de bulles reste dans les limites requises pour les utilisations commerciales.

Les vitrages selon l'invention montrent le grand avantage par rapport aux vitrages antérieurs d'une grande souplesse de production, mais surtout de présenter, à performances égales, des structures allégées et moins épaisses.

Les résultats obtenus pour les vitrages EI 60, en termes de réduction de poids et d'épaisseur, se trouvent également pour les produits des autres classes. Des vitrages de classe EI 90 selon l'invention peuvent être constitués par exemple de 3 feuilles de verre de 5mm d'épaisseur chacune séparées par deux couches intumescentes également de 5mm d'épaisseur. Un vitrageEI120...

## Revendications

1. Vitrage anti-feu essentiellement transparent comprenant des feuilles de verre et une ou plusieurs couches de composition intumescente de silicate alcalin hydraté entre ces feuilles de verre, les épaisseurs de ces différents constituants et la composition de la ou des couches intumescentes obtenues sans séchage étant tels que l'épaisseur e du vitrage, exprimée en millimètres, feuilles de verre et couche(s) intumescente(s), et la classe de résistance au feu EI, exprimée en minutes, répondent à la relation 3 ≤ EI/e.

2. Vitrage selon la revendication 1 dans lequel les épaisseurs de ces différents constituants et la composition de la ou des couches intumescentes étant tels que l'épaisseur e du vitrage, exprimée en millimètres, feuilles de verre et couche(s) intumescente(s), et la classe de résistance au feu EI, exprimée en minutes, répondent à la relation 3,2 ≤ EI/e.

3. Vitrage selon l'une des revendications précédentes dans lequel la (les) couche(s) intumescente(s) présentent une teneur en eau comprise entre 33 et 43% en poids, et un rapport molaire compris entre 3,5 et 5.

4. vitrage selon l'une des revendications précédentes dans lequel la (les) couche(s) intumescente(s) sont produites sans séchage à partir d'une composition préparée en incorporant des suspensions de silice colloïdales dans lesquelles les particules ont un diamètre moyen qui n'est pas inférieur à 50nm.

5. Vitrage selon la revendication 4 dans lequel les particules de silice colloïdale ont un diamètre moyen compris entre 60 et 120nm.

6. Vitrage selon l'une des revendications précédentes de classe anti-feu EI 60 comprenant une couche intumescente et deux feuilles de verre.

7. Vitrage selon l'une des revendications précédentes de classe anti-feu EI 90 comprenant trois feuilles de verre et deux couches intumescentes.
